(19) **Europäisches Patentamt**
**European Patent Office**
**Office européen des brevets**

(11) **EP 4 442 740 A1**

(12) **EUROPEAN PATENT APPLICATION**
published in accordance with Art. 153(4) EPC

(43) Date of publication:
**09.10.2024 Bulletin 2024/41**

(21) Application number: **22901190.3**

(22) Date of filing: **25.11.2022**

(51) International Patent Classification (IPC):
**C08J 5/18** *(2006.01)*  **C09D 5/00** *(2006.01)*
**C09D 201/00** *(2006.01)*  **G09F 9/30** *(2006.01)*
**G09F 9/33** *(2006.01)*

(52) Cooperative Patent Classification (CPC):
**C08J 5/18; C09D 5/00; C09D 201/00; G09F 9/30; G09F 9/33**

(86) International application number:
**PCT/JP2022/043504**

(87) International publication number:
**WO 2023/100757 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2021 JP 2021196275**

(71) Applicant: **Unitika Ltd.**
**Osaka-shi, Osaka 541-8566 (JP)**

(72) Inventors:
• **YAMANE Shuhei**
**Uji-shi, Kyoto 611-0021 (JP)**
• **OKABE Takashi**
**Uji-shi, Kyoto 611-0021 (JP)**

(74) Representative: **Novagraaf International SA**
**Chemin de l'Echo 3**
**1213 Onex, Geneva (CH)**

(54) **THERMOPLASTIC RESIN FILM**

(57)    Provided is a thermoplastic resin film having a haze of 13% or less, wherein a loop stiffness value in at least one direction on a film plane as measured by a loop stiffness tester is 140 mN/cm or more.

**EP 4 442 740 A1**

**Description**

Technical Field

The present invention relates to a thermoplastic resin film having excellent transparency and flex resistance, and sufficient bending rigidity as a support substrate.

Background Art

In image display apparatuses such as organic electroluminescence (EL) displays, and liquid crystal displays including an LED device as a backlight source, glass has been heretofore used as a substrate on which an LED device is mounted. In recent years, however, glass substrates have come to pose serious problems such as increased weight due to the increase in screen size of the apparatus and breakage due to the decrease in thickness.

Therefore, it is required to employ plastic substrates which are lighter, more flexible, and easy to form by molding. Flexible plastic substrates enable the provision of flexible displays capable of being housed in a folded or rolled state, and are expected to become more widespread in the future.

As LED displays have become increasingly widespread in recent years, for example, the demand for displays of a type in which light is transmitted to the substrate side, such as a bottom emission type, has increased. For this reason, LED-mounting substrates have also been required to have transparency.

Patent Literature 1 discloses a thermoplastic resin film which has excellent flex resistance and can be suitably used in flexible image display apparatuses.

Citation List

Patent Literature

Patent Literature 1: Japanese Patent Laid-Open No. 2019-099626

Summary of Invention

Technical Problem

However, the thermoplastic resin film disclosed in Patent Literature 1 may lack sufficient bending rigidity although it has excellent flex resistance, and when the thermoplastic resin film is used in an image display apparatus including an LED device, the apparatus as a whole may warp instead of standing upright, resulting in impairment of aesthetic impression as an image display apparatus.

An object of the present invention is to provide a film having sufficiently good transparency as an optical film, and sufficient bending rigidity as a support substrate.

Solution to Problem

The present inventors have intensively conducted studies for solving the above-described problems, and resultantly found that the problems can be solved by a thermoplastic resin film which are manufactured while conditions such as a stretching ratio and a temperature during the manufacturing of the film are controlled, leading to completion of the present invention.

That is, the gist of the present invention is as follows.

In a thermoplastic resin film of the present invention having a haze of 13% or less,
a loop stiffness value in at least one direction on a film plane as measured by a loop stiffness tester is 140 mN/cm or more.

The thermoplastic resin film of the present invention preferably has a thickness of 40 $\mu$m or more.

In the thermoplastic resin film of the present invention, the glass transition temperature of a thermoplastic resin forming the thermoplastic resin film is preferably 60°C or higher.

In the thermoplastic resin film of the present invention, the degree of crystallinity of a surface layer is preferably 0.1 or more.

In the thermoplastic resin film of the present invention, the thermoplastic resin is preferably a semi-aromatic polyamide.

The thermoplastic resin film of the present invention preferably passes 400,000 or more breakage inducing tests in a flexure test conducted using a clamshell type bending tester.

The thermoplastic resin film of the present invention preferably contains 0.01 to 0.4% by mass of fine particles.

The thermoplastic resin film of the present invention preferably has a kinetic friction coefficient of 0.8 or less as measured according to JIS K 7125.

A laminate of the present invention includes the thermoplastic resin film and an easily adhesive layer laminated on at least one surface of the thermoplastic resin film.

An LED-mounting substrate of the present invention includes the laminate.

A flexible LED display of the present invention includes the LED-mounting substrate.

A method of manufacturing the thermoplastic resin film of the present invention includes biaxially stretching an unstretched film of a thermoplastic resin, and then performing cooling.

Advantageous Effects of Invention

The thermoplastic resin film of the present invention has sufficient transparency as an optical film, and sufficient bending rigidity as a support substrate, and therefore can be suitably used as an LED-mounting substrate of a flexible LED display, an optical substrate of organic EL or the like, a material for electronic substrates such as flexible printed wiring substrates and flexible flat cables, a coverlay film for flexible printed wiring, or the like.

Description of Embodiments

A thermoplastic resin film of the present invention is a thermoplastic resin film having a haze of 13% or less, wherein a loop stiffness value in at least one direction on a film plane as measured by a loop stiffness tester is 140 mN/cm or more.

<Thermoplastic resin>

A resin for forming the film of the present invention is required to be a thermoplastic resin. When the film is a thermoplastic resin film, the film is easy to form, and can have high durability against bending.

The thermoplastic resin for forming the film is preferably a polyamide resin, and more preferably a semi-aromatic polyamide resin. The semi-aromatic polyamide is obtained by polycondensation of an aromatic dicarboxylic acid component (for example, terephthalic acid, isophthalic acid, phthalic acid or naphthalenedicarboxylic acid) and an aliphatic diamine component.

The aromatic dicarboxylic acid component forming the semi-aromatic polyamide resin contains preferably 60 mol% or more, more preferably 70 mol% or more, and still more preferably 85 mol% or more of terephthalic acid. If the content of terephthalic acid is less than 60 mol%, the resulting film may be poor in heat resistance and low-water absorbing property.

Examples of the aromatic dicarboxylic acid component other than terephthalic acid include isophthalic acid and naphthalenedicarboxylic acid (1,2-isomer, 1,3-isomer, 1,4-isomer, 1,5-isomer, 1,6-isomer, 1,7-isomer, 1,8-isomer, 2,3-isomer, 2,6-isomer and 2,7-isomer).

The semi-aromatic polyamide may contain a dicarboxylic acid component other than an aromatic dicarboxylic acid component as long as the effects of the present invention are not impaired. Examples of the other dicarboxylic acid include aliphatic dicarboxylic acids such as oxalic acid, malonic acid, succinic acid, glutaric acid, adipic acid, sebacic acid, dodecanedioic acid, tetradecanedioic acid and octadecanedioic acid.

The aliphatic diamine component preferably contains an aliphatic diamine having 6 to 12 carbon atoms as a main component, more preferably contains an aliphatic diamine having 9 to 12 carbon atoms as a main component, and still more preferably contains an aliphatic diamine having 9 or 10 carbon atoms as a main component.

The content of the aliphatic diamine having 6 to 12 carbon atoms in the aliphatic diamine component is preferably 60 mol% or more, more preferably 75 mol% or more, and still more preferably 90 mol% or more. When the content of the aliphatic diamine having 6 to 12 carbon atoms is 60 mol% or more, it is possible to obtain a heat-resistant film while securing productivity of the film. The aliphatic diamines having 6 to 12 carbon atoms may be used alone, or used in combination of two or more thereof. When two or more of the aliphatic diamines are used in combination, the total amount thereof is taken as a content of the aliphatic diamine.

Examples of the aliphatic diamine having 6 to 12 carbon atoms include linear aliphatic diamines such as 1,6-hexanediamine, 1,7-heptanediamine, 1,8-octanediamine, 1,9-nonanediamine, 1,10-decanediamine, 1,11-undecanediamine and 1,12-dodecanediamine, and branched aliphatic diamines such as 2-methyl-1,8-octanediamine, 4-methyl-1,8-octanediamine, 5-methyl-1,9-nonanediamine, 2,2,4-/2,4,4-trimethyl-1,6-hexanediamine, 2-methyl-1,5-pentadiamine, 2-methyl-1,6-hexanediamine and 2-methyl-1,7-heptanediamine.

Examples of the aliphatic diamine other than aliphatic diamines having 6 to 12 carbon atoms include linear aliphatic diamines such as 1,4-butanediamine and 1,5-pentanediamine.

The semi-aromatic polyamide may contain a diamine component other than an aliphatic diamine component as long as the effects of the present invention are not impaired. Examples of the other diamine component include alicyclic diamines such as isophoronediamine, norbornane dimethylamine and tricyclodecane dimethylamine, and aromatic diamines such as meta-xylylenediamine, para-xylylenediamine, meta-phenylenediamine and para-phenylenediamine.

In the semi-aromatic polyamide, a lactam such as $\varepsilon$-caprolactam, $\zeta$-enantholactam, $\eta$-capryllactam or $\omega$-laurolactam may be copolymerized.

Preferably, the types of monomers for forming the semi-aromatic polyamide and the copolymerization ratio thereof are selected so that the melting temperature (Tm) of the resulting semi-aromatic polyamide is in the range of 270 to 350°C. When the Tm of the semi-aromatic polyamide is in the above-described range, it is possible to efficiently suppress thermal decomposition in processing into a film. If the Tm is lower than 270°C, the resulting film may have insufficient heat resistance. Tm of higher than 350°C may cause thermal decomposition during manufacturing of the film.

The intrinsic viscosity of the semi-aromatic polyamide is preferably 0.8 to 2.0 dL/g, and more preferably 0.9 to 1.8 dL/g. When the semi-aromatic polyamide has an intrinsic viscosity of 0.8 dL/g or more, a film having excellent mechanical strength can be manufactured, but if the semi-aromatic polyamide has an intrinsic viscosity of more than 2.0 dL/g, it may be difficult to produce a film.

The semi-aromatic polyamide may contain a polymerization catalyst and an end-capping agent. Examples of the end-capping agent include acetic acid, lauric acid, benzoic acid, octylamine, cyclohexylamine and aniline. Examples of the polymerization catalyst include phosphoric acid, phosphorous acid, hypophosphorous acid, and salts thereof.

<Thermoplastic resin film>

In the thermoplastic resin film of the present invention, a loop stiffness value in at least one direction on a film plane is required to be 140 mN/cm or more, preferably 145 mN/cm or more, and more preferably 150 mN/cm or more. The thermoplastic resin film, which has a loop stiffness value of 140 mN/cm or more, thus has sufficient film bending rigidity as a support substrate, and ensures that an image display apparatus using the thermoplastic resin film as an LED-mounting substrate is excellent in aesthetic impression.

The thermoplastic resin film of the present invention is required to have a haze of 13% or less as measured according to JIS K 7105, preferably 10% or less, and more preferably 5% or less. The thermoplastic resin film, which has a haze of more than 13%, is poor in visibility. The thermoplastic resin film, which has a haze of 13% or less, thus is excellent in visibility, and ensures that, in the case of use as a substrate in a display of bottom emission type, a light source of an LED device or the like can be thoroughly extracted through the substrate. Further, even if the display is upsized, the number of pixels increases due to enhanced definition, and the aperture ratio decreases, it is possible to use the thermoplastic resin film as a substrate material while maintaining practical light extraction efficiency. In the case of a top mission type, it is possible to further improve light extraction efficiency.

The thermoplastic resin film of the present invention has a thickness of preferably 40 $\mu$m or more, more preferably 45 $\mu$m or more, still more preferably 70 $\mu$m or more, and particularly preferably 75 $\mu$m or more. The thermoplastic resin film, which has a thickness of 40 $\mu$m or more, thus enables prevention of warpage of the laminate as a whole in mounting of an LED device. The suppression of warpage of the laminate not only ensures flatness as a substrate material, but also enables construction of a display such that the light extraction efficiency is uniform and a large-sized display screen does not have uneven lightness.

The thermoplastic resin film has a thickness of preferably 200 $\mu$m or less, more preferably 160 $\mu$m or less, and still more preferably 90 $\mu$m or less. When the thermoplastic resin film has a thickness of 200 $\mu$m or less, handling in roll-to-roll processing is facilitated, and in application to an image display apparatus, an increase in thickness of the image display apparatus as a whole can be suppressed.

The thermoplastic resin for forming the thermoplastic resin film of the present invention has a glass transition temperature of 60°C or higher, and more preferably 100°C or higher. The thermoplastic resin film, which has a glass transition temperature of 60°C or higher, thus can withstand a processing temperature in production of an LED-mounting substrate, and can be prevented from being thermally expanded or deformed by generation of heat from an LED light source. Further, the thermoplastic resin film enables construction of a display such that long-term durability is secured to improve reliability of quality retention, and in relation to the suppression of warpage, the light extraction efficiency is uniform and a large-sized display screen does not have uneven lightness.

The surface layer of the thermoplastic resin film of the present invention has a degree of crystallinity of preferably 0.1 or more, more preferably 0.15 or more, and still more preferably 0.2 or more as obtained by infrared spectroscopy. If the degree of crystallinity of the surface layer is less than 0.1, the thermoplastic resin film has reduced bending rigidity, and an LED-mounting substrate using the film may be poor in aesthetic impression.

The degree of crystallinity of the surface layer of the thermoplastic resin film is preferably 0.4 or less, more preferably 0.3 or less, and still more preferably 0.25 or less. If the degree of crystallinity of the surface layer is more than 0.4, the thermoplastic resin film may have an increased haze, leading to poor visibility.

The degree of crystallinity in the present invention is measured by an infrared spectroscopic ATR method using a diamond prism, and determined. Specifically, in the obtained infrared spectrum, an area ratio determined by P1/(P1 + P2) is defined as a degree of crystallinity, where P1 is an area of a peak present at the lower wavelength (peak derived from crystallization) and P2 is an area of a peak present at the higher wavelength (peak derived from an amorphous part), in a wavelength range of 1100 to 1250 $cm^{-1}$.

The thermoplastic resin film of the present invention passed preferably 400,000 or more, more preferably 450,000 or more, and still more preferably 500,000 or more breakage inducing tests in a flexure test conducted using a clamshell type bending tester. The thermoplastic resin film, which passes 400,000 or more breakage inducing tests, thus can withstand long-term use in application to a foldable display or the like.

The thermoplastic resin film of the present invention has a kinetic friction coefficient of preferably 0.8 or less, more preferably 0.7 or less, and still more preferably 0.5 or less as measured according to JIS K 7125. The thermoplastic resin film, which has a kinetic friction coefficient of 0.8 or less, thus can be effectively inhibited from suffering scratches generated during processing, such as scrapes generated between a roll and the film during roll conveyance.

In the thermoplastic resin film of the present invention, the heat shrinkage ratio in the machine direction, $S_{MD}$ and the heat shrinkage ratio in the transverse direction, $S_{TD}$ of the film are each preferably - 1.0 to 1.5%, more preferably -0.8 to 1.3%, and still more preferably -0.6 to 1.0% as measured under the condition of 250°C for 5 minutes. The thermoplastic resin film, which has a heat shrinkage ratio of 1.5% or less, thus has improved dimension stability and excellent heat resistance. The thermoplastic resin film, which has a heat shrinkage ratio of more than 1.5%, may cause troubles in processing due to an increase in dimension change when processed at a high temperature.

The thermoplastic resin film of the present invention has a tensile strength of preferably 110 MPa or more, more preferably 130 MPa or more, and still more preferably 140 MPa or more in the machine direction as measured according to JIS K 7127. The tensile strength in the transverse direction is preferably 200 MPa or more, more preferably 220 MPa or more, and still more preferably 230 MPa or more. The thermoplastic resin film, whose tensile strength is within the above-described range, thus is unlikely to break during formation and processing.

As long as characteristics as a film are not sacrificed, the thermoplastic resin film of the present invention may contain additives as necessary for further improving its characteristics. Examples of the additives include slipping agents, coloring agents such as pigments and dyes such as titanium, anti-coloring agents, heat stabilizers, antioxidants such as hindered phenol, phosphoric acid esters and phosphorous acid esters, weather resistance improvers such as benzotriazole-based compounds, bromine- and phosphorus-based flame retardants, plasticizers, mold release agents, toughening agents such as talk, modifiers, antistatic agents, ultraviolet absorbers, anti-fogging agents, and various polymeric resins.

Examples of the slipping agent for improving slippage include particles of inorganic substances such as silica, alumina, titanium dioxide, calcium carbonate, kaolin and barium sulfate. Examples of organic particles include acryl-based resin particles, melamine resin particles, silicone resin particles, and crosslinked polystyrene particles. Among them, silica particles and acryl-based resin particles are preferable because of good dispersibility in a substrate film and good handleability.

The thermoplastic resin film of the present invention preferably has fine particles as a slipping agent from the viewpoint of slippage and bending rigidity. The content of the fine particles in the thermoplastic resin film is preferably 0.01 to 0.4 mass%, more preferably 0.05 to 0.3 mass%, and still more preferably 0.1 to 0.3 mass%.

From the viewpoint of the slippage of the film, the fine particles preferably have a large average particle diameter, which is 0.010 $\mu$m or more, more preferably 0.5 $\mu$m or more, and still more preferably 1.0 $\mu$m or more.

From the viewpoint of the transparency and bending rigidity of the film, the average particle diameter is preferably small, and preferably 5.0 $\mu$m or less, more preferably 4.0 $\mu$m or less, and still more preferably 3.0 $\mu$m or less. When the average particle diameter of the fine particles is small, gaps generated between the fine particles and the resin forming the film become small, so that the thermoplastic resin film has excellent transparency and bending rigidity. A smaller particle diameter is more preferable because the fine particles become less likely to fall.

The thermoplastic resin film of the present invention may include two or more types of fine particles having different average particle diameters, and in this case, the balance of slippage, transparency and bending rigidity can be adjusted.

For incorporating the above-described additives into the thermoplastic resin film, various methods can be used. Among them, typical methods are as follows.

(A) A method in which additives are added during polymerization of a thermoplastic resin.
(B) A master batch method in which pellets obtained by directly adding additives to a thermoplastic resin and melting and kneading the mixture are prepared.
(C) A method in which additives are directly added to a thermoplastic resin during film formation, and the mixture is melted and kneaded by an extruder.
(D) A method in which additives are directly added to an extruder during film formation, followed by melting and kneading.

<Method of manufacturing thermoplastic resin film>

The thermoplastic resin film of the present invention can be manufactured by, for example, a method in which manufacturing conditions such as a stretching ratio in stretching of a film and a subsequent temperature are controlled to increase the degree of crystallinity of the film.

(Thermoplastic resin)

As a thermoplastic resin for use in manufacturing of the thermoplastic resin film, a commercially available product can be suitably used. Examples of the commercially available product include "GENESTAR (registered trademark)" manufactured by KURARAY CO., LTD., "XecoT (registered trademark)" manufactured by UNITIKA LTD., "RENY (registered trademark)" manufactured by Mitsubishi Engineering-Plastics Corporation, "ARLEN (registered trademark)" manufactured by Mitsui Chemicals, Inc. and "ULTRAMID (registered trademark)" manufactured by BASF SE for the semi-aromatic resin, and "NOVAMID 1022 (registered trademark)" manufactured by Mitsubishi Plastics, Inc. and "A1030 BRF (registered trademark)" manufactured by UNITIKA LTD. for the polyamide 6 resin.
The semi-aromatic polyamide can be manufactured using a method known as a method of manufacturing a crystalline polyamide. Examples thereof include a solution polymerization method or interfacial polymerization method using an acid chloride and a diamine component as raw materials (method A), a method in which a lower polymer is produced using a dicarboxylic acid component and a diamine component as raw materials, and the molecular weight of the lower polymer is increased by melt polymerization or solid phase polymerization (method B), a method in which a crushed mixture of a salt and a lower polymer is formed using a dicarboxylic acid component and a diamine component as raw materials, and subjected to solid polymerization (method C), and a method in which a salt is formed using a dicarboxylic acid component and a diamine component as raw materials, and subjected to solid phase polymerization (method D). Among them, method C and method D are preferable, and method D is more preferable. As compared to method B, method C and method D enable formation of a crushed mixture of a salt and a lower polymer or a salt at a low temperature, and do not require a large amount of water during formation of the crushed mixture of a salt and a lower polymer or formation of the salt. Therefore, generation of a gel-like material can be reduced, and it is possible to reduce fisheyes.
In method B, for example, a nylon salt prepared by mixing a diamine component, a dicarboxylic acid component and a polymerization catalyst in bulk is subjected to heat polymerization at a temperature of 200 to 250°C. In this way, a lower polymer can be obtained. The intrinsic viscosity of the lower polymer is preferably 0.1 to 0.6 dL/g. When the intrinsic viscosity of the lower polymer is in this range, there is an advantage that in subsequent solid phase polymerization or melt polymerization, a mole balance between carboxyl groups in the dicarboxylic acid component and amino groups in the diamine component is not lost, and the polymerization rate can be increased. If the intrinsic viscosity of the lower polymer is less than 0.1 dL/g, the polymerization time may increase, leading to poor productivity. If the intrinsic viscosity of the lower polymer is more than 0.6 dL/g, the resulting semi-aromatic polyamide may be colored.
The solid polymerization of the lower polymer is performed preferably under reduced pressure or under a flow of an inert gas.
The solid phase polymerization temperature is preferably 200 to 280°C. When the solid phase polymerization temperature is in this range, coloring and gelation of the resulting semi-aromatic polyamide can be suppressed. If the solid phase polymerization temperature is lower than 200°C, the polymerization time may increase, resulting in poor productivity. If the solid phase polymerization temperature is higher than 280°C, the resulting semi-aromatic polyamide may be colored or gelled.
The melt polymerization of the lower polymer is performed preferably at a temperature of 350°C or lower. If the polymerization temperature is higher than 350°C, decomposition or thermal degradation of the semi-aromatic polyamide may be promoted. Therefore, a film obtained from such a semi-aromatic polyamide may be poor in strength and appearance. The melt polymerization includes melt polymerization using a melt extruder.
In method C, for example, a suspension composed of a molten aliphatic diamine and a solid aromatic dicarboxylic acid is mixed by stirring to obtain a mixed liquid. In the mixed liquid, a reaction for forming a salt by a reaction of an aromatic dicarboxylic acid and an aliphatic diamine and a reaction for forming a lower polymer by polymerization of the formed salt are carried out at a temperature lower than the melting temperature of a semi-aromatic polyamide as an ultimate product to obtain a mixture of a salt and a lower polymer. Here, the mixture may be crushed while being reacted, or may be crushed after being taken out once after the reaction. The obtained reaction product is subjected to solid phase polymerization at a temperature lower than the melting temperature of a semi-aromatic polyamide as an ultimate product to increase the molecular weight of the reaction product to a predetermined molecular weight, thereby obtaining a semi-aromatic polyamide. Preferably, the solid phase polymerization is performed in a flow of an inert gas such as nitrogen at a polymerization temperature of 180 to 270°C for a reaction time of 0.5 to 10 hours.

In method D, for example, aromatic dicarboxylic acid powder is heated beforehand at a temperature equal to or higher than the melting temperature of an aliphatic diamine and equal to or lower than the melting temperature of an aromatic dicarboxylic acid, and to the aromatic dicarboxylic acid powder at this temperature, an aliphatic diamine is added with water substantially kept from entering so as to maintain the powdered state of the aromatic dicarboxylic acid. In this way, a salt is produced. Subsequently, the obtained salt is subjected to solid phase polymerization at a temperature lower than the melting temperature of a semi-aromatic polyamide as an ultimate product to increase the molecular weight of the salt to a predetermined molecular weight, thereby obtaining a semi-aromatic polyamide. Preferably, the solid phase polymerization is performed in a flow of an inert gas such as nitrogen at a polymerization temperature of 180 to 270°C for a reaction time of 0.5 to 10 hours.

The raw material for the semi-aromatic polyamide film may be a mixture of the virgin raw materials, an irregular film formed in manufacturing of the semi-aromatic polyamide film, or a mixture of scraps generated from edge trimming, or may be prepared by adding virgin raw materials to the mixture of scraps. The mixing of these materials can be performed by a known methods such as a method in which the materials are dry-blended using a known apparatus, or a kneading method in which the materials are melted, kneaded and mixed using a single-screw or twin-screw extruder.

(Extrusion)

In the method of manufacturing the thermoplastic resin film of the present invention, an unstretched film of a thermoplastic resin for use in a biaxial stretching step can be manufactured by melting and mixing the thermoplastic resin in an extruder at a temperature of 280 to 340°C for 3 to 15 minutes, then extruding the mixture into a sheet shape through a T-die, bringing the sheet-shaped material into close contact with a cooling roll adjusted to a temperature of 30 to 40°C, and thereby allowing the sheet-shaped material to cool.

(Stretching)

In the method of manufacturing the thermoplastic resin film of the present invention, an unstretched film is biaxially stretched, and the thermoplastic resin is oriented and crystallized by the stretching.

The stretching method is not limited, and may be a flat-type sequential biaxial stretching method, a flat-type simultaneous biaxial stretching method, a tubular method or the like. In particular, a flat-type sequential biaxial stretching method and a flat-type simultaneous biaxial stretching method are most suitable because a film with good thickness accuracy can be obtained.

Examples of the stretching apparatus for use in the flat-type simultaneous stretching method include a screw tenter, a pantograph tenter, and a linear motor-driven clip tenter.

The stretching ratio is preferably 2.0 to 3.5 in the machine direction and 2.0 to 4.0 in the transverse direction, and more preferably 2.0 to 3.0 in the machine direction and 2.0 to 3.5 in the transverse direction.

If the stretching ratio in the machine direction is more than 3.5, the resulting stretched film may be excessively crystallized, leading to deterioration of stretchability in the transverse direction. Even if stretching in the transverse direction can be performed, the resulting stretched film is likely to have stretch unevenness, and thus may suffer deterioration of thickness accuracy, reduction of tensile strength in the machine direction, or deterioration of transparency.

A stretching ratio of more than 4.0 in the transverse direction may cause deterioration of transparency, elevation of the heat shrinkage ratio, deterioration of dimension stability, and reduction of tensile strength.

If the stretching ratio in each of the machine direction and the transverse direction is less than 2.0, the resulting stretched film may suffer reduction of the loop stiffness value and tensile strength, and the stretched film is likely to have stretch unevenness, and thus may suffer thickness unevenness, or deterioration of flatness.

For the stretching rate, the distortion rate in stretching in each of the machine direction and the transverse direction is preferably more than 400%/min, more preferably 800 to 12,000%/min, and still more preferably 1,200 to 6,000%/min. If the distortion rate is 400%/min or less, crystals may grow during stretching, leading to breakage of the film. If the distortion rate is excessively high, the unstretched film may be unable to follow deformation, leading to breakage of the film.

The stretching temperature is preferably equal to or higher than the glass transition temperature (Tg) of the thermoplastic resin, and more preferably higher than Tg and equal to or lower than (Tg + 50°C). If the stretching temperature is lower than Tg, the film is likely to break, and cannot be manufactured with stability. If the stretching temperature is higher than (Tg + 50°C), the film may have stretch unevenness.

(Thermal fixation)

After the stretching is performed, the thermoplastic resin film is preferably thermally fixed with the film grasped by clips used in the stretching. By performing the thermal fixation, the heat shrinkage ratio of the resulting film can be reduced without unevenness caused by heat. The thermal fixation temperature is preferably 260 to 280°C, more preferably 263 to 278°C, and still more preferably 265 to 275°C. A thermal fixation temperature of lower than 260°C increases the heat shrinkage ratio of the resulting film. If the thermal fixation temperature is higher than 280°C, the resulting film has low tensile strength, and is likely to have a poor appearance due to generation of wrinkles by heat, and the film may break during thermal fixation, leading to difficulty in production of a biaxially stretched film.

Examples of the thermal fixation method include known methods such as a method of spraying hot air, a method of irradiation with an infrared ray, and a method of irradiation with a microwave. Among them, a method of spraying hot air is preferable because it enables uniform heating with accuracy.

(Relaxation)

The thermally fixed film may be relaxed at the same temperature as the thermal fixation temperature with the film grasped by the clips. By performing the relaxation, a film having a low heat shrinkage ratio and high dimension stability can be obtained. The relaxation ratio is preferably 10.0% or less in the machine direction and 1.0 to 12.0% in the transverse direction. If the relaxation ratio in the machine direction is more than 10.0%, the film may sag.

(Cooling)

As one of the methods of suitably manufacturing the thermoplastic resin film of the present invention, the thermally fixed film, or the thermally relaxed film if thermally relaxation has been performed is cooled at a temperature lower than the temperature in the thermal fixation or thermal relaxation with the film grasped by clips. By performing cooling, a rapid decrease in temperature from the high temperature in the thermal fixation or thermal relaxation to room temperature (rapid cooling) can be prevented to increase the degree of crystallinity of the resulting thermoplastic resin film, and the bending rigidity of the film can be enhanced.

That is, the method of manufacturing a thermoplastic resin film according to the invention of the present application is required to include biaxially stretching the unstretched film of a thermoplastic resin, and then performing cooling.

The cooling temperature is preferably 110°C or higher, and more preferably 120°C or higher. The cooling temperature is preferably 150°C or lower, and more preferably 140°C or lower. If the cooling temperature is higher than 150°C, the difference between the cooling temperature and room temperature increases, so that the film is rapidly cooled to room temperature in the subsequent step. As a result, the resulting thermoplastic resin film cannot have a sufficiently increased degree of crystallinity.

That is, when the thermoplastic resin film of the present invention is held at the predetermined cooling temperature for a certain period of time, it becomes easy for the thermoplastic resin film of the present invention to have a favorable degree of crystallinity. The holding time is preferably 0.5 to 25 seconds, more preferably 1 to 20 seconds, and still more preferably 2 to 15 seconds.

In an apparatus for use in manufacturing of the thermoplastic resin film of the present invention, the surface of each of a cylinder, a melting section of a barrel, a gauging section, a single tube, a filter, a T-die and the like is preferably treated so as to reduce the roughness of the surface for preventing accumulation of resin. The method of reducing the roughness of the surface is, for example, a method in which the surface is reformed with a substance having low polarity, or a method in which silicon nitride or diamond-like carbon is deposited on the surface.

The obtained thermoplastic resin film may be in a sheet form, or may be formed into film roll by winding the film around a wind-up roll. From the viewpoint of productivity in use for various purposes, it is preferable to form the film into a film roll. When formed into a film roll, the film may be slit to a desired width.

<Laminate>

The thermoplastic resin film may be a single-layer film composed of one layer, or may have a multi-layer structure in which two or more layers are laminated. In the case of a multi-layer structure, for example, the film may have a two-layer structure in which one of the two layers contains a slipping agent, and the film may have a three-layer structure in which layers located at both surfaces, among three layers, each contain a slipping agent. The types and the contents of slipping agents incorporated can be each independently designed. Such a multi-layer structure enables the roughness of each surface of the thermoplastic resin film to be independently controlled.

At least one surface of the thermoplastic resin film may be coated with an easily adhesive layer or subjected to corona treatment, plasma treatment, acid treatment, flame treatment or the like for improving the adhesiveness to another material.

The resin for forming the easily adhesive layer is not limited, and various resins can be used. Examples of the resin include polyamide-based resins, polyurethane-based resins, polyester-based resins, acryl-based resins, and epoxy-based resins. Among them, polyamide-based resins, polyester-based resins, polyurethane-based resins and acryl-based resins are preferable because they are excellent in adhesiveness to various functional layers, and polyamide-based resins, polyurethane-based resins and acryl-based resins are more preferable from the viewpoint of heat resistance.

(Polyamide-based resin)

The polyamide-based resin for forming an easily adhesive layer is not limited, and examples thereof include aliphatic polyamides, alicyclic polyamides, and aromatic polyamides. The aromatic polyamide includes a semi-aromatic polyamide and a wholly aromatic polyamide (aramid). For improving the adhesiveness to the semi-aromatic polyamide, the same type of semi-aromatic polyamide can also be used as an easily adhesive layer. Among these polyamide-based resins, dimer acid-based polyamide is preferable because it is excellent in balance between heat resistance and adhesiveness. A water dispersion of polyamide resin can be used for forming an easily adhesive layer.

Examples of the commercially available polyamide resin aqueous dispersion include SEPOLSIONs PA-150 and PA-200 (manufactured by Sumitomo Seika Chemicals Co., Ltd.).

(Polyurethan-based resin)

The polyurethane-based resin for forming an easily adhesive layer is not limited, and examples thereof include various urethane-based resins such as polyester-based urethane resins, polyether-based urethane resins and polycarbonate-based urethane resins. In the polyurethane-based resin, a compound having a sulfo group and a compound having a carboxyl group may be copolymerized for improving adhesion between a substrate film and a functional layer and improving dispersibility in water. A water dispersion of polyurethane resin can be used for forming an easily adhesive layer.

Examples of the commercially available polyurethane resin aqueous dispersion include HYDRAN series (manufactured by DIC Corporation), SUPERFLEX series (manufactured by DKS Co., Ltd.), TAKELAC series (manufactured by Mitsui Chemicals Inc.), ADEKABON TITER series (manufactured by ADEKA CORPORATION), and UCOAT (manufactured by Sanyo Chemical Industries, Ltd.).

(Polyester-based resin)

The polyester-based resin for forming an easily adhesive layer is not limited, and examples thereof include polyester-based resins composed of a polybasic acid component and a polyhydric alcohol component and manufactured by a known polymerization method. The polybasic acid components may be used alone or used in combination of two or more thereof, and the polyhydric alcohol components may be used alone or used in combination of two or more thereof. A water dispersion of polyester resin can be used for forming an easily adhesive layer.

Examples of the commercially available polyester resin aqueous dispersion include ELITELs KA-5034, KZA-0134 and KZA-3556 (each manufactured by UNITIKA LTD.), and PLAS COATs Z-730 and RZ-142 (each manufactured by GOO CHEMICAL CO., LTD.).

(Acryl-based resin)

The acryl-based resin for forming an easily adhesive layer is not limited, and is obtained by copolymerizing a vinyl compound such as styrene, methyl methacrylate or acrylonitrile and a functional monomer such as acrylic acid, methacrylic acid, itaconic acid, acrylamide, methylolacrylamide, hydroxyethyl acrylate or hydroxyethyl methacrylate with ethyl acrylate, butyl acrylate, 2-ethylhexyl acrylate or the like as a main component. For forming an easily adhesive layer, an aqueous dispersion of acrylic resin can be used.

Examples of the commercially available acrylic resin aqueous dispersion include NIKASOL series (manufactured by Nippon Carbide Industries Co., Ltd.), NANOCRYL series and LIOCRYL series (each manufactured by Toyo Chem Co., Ltd.), ULTRASOL series (Aica Kogyo Co., Ltd.), and VONCOAT series (manufactured by DIC Corporation).

An inorganic substance such as metal or an oxide thereof, another polymer, paper, woven fabric, nonwoven fabric, wood or the like may be laminated on the thermoplastic resin film of the present invention.

<Applications>

A laminate including the thermoplastic resin film of the present invention and the easily adhesive layer laminated on at least one surface of the thermoplastic resin film can be used for an LED-mounting substrate, and the LED-mounting substrate can be used for a flexible LED display.

Further, since the thermoplastic resin film of the present invention is excellent in dimension stability while having heat resistance, it can be used for various electronic materials, optical components and other applications.

Specifically, the thermoplastic resin film can be used as packaging materials for pharmaceutical products; packaging materials for foods such as boil-in-bag foods; packaging materials for electronic components such as semiconductor packages; electrical insulation materials for motors, transformers, cables and the like; dielectric materials for capacitors; materials for magnetic tapes such as cassette tapes, data storage magnetic tapes for digital data storage, and video tapes; protecting sheets for solar cell substrates, liquid crystal plates, conductive films and display devices; materials for electronic substrates such as substrates for flexible printed wiring, and flexible flat cables; heat-resistant tapes such as coverlay films for flexible printed wiring, heat-resistant masking tapes and industrial process tapes; heat-resistant bar code labels; heat-resistant reflectors; insulation tapes; various mold release films; heat-resistant base films; photographic films; molding materials; agricultural materials; medical materials; civil engineering and building materials; and filter films and the like, and films for household use and industrial materials.

Further, since the thermoplastic resin film of the present invention is excellent in the above-described characteristics, that is, heat resistance, dimension stability and transparency, it can be used for applications such as display materials for mobile devices and the like, and display apparatuses. Specifically, the thermoplastic resin film can be used as optical substrates for various displays such as liquid crystal displays and organic EL displays, substrate films for various functional materials such as polarizing plates and phase difference plates, and protecting and sealing films for light emitting devices and display apparatuses.

Examples

Hereinafter, the present invention will be described in detail by way of Examples.

1. Evaluation method

(1) Intrinsic viscosity of thermoplastic resin

Inherent viscosities ($\eta$inh) of resin at concentrations of 0.05 g/dL, 0.1 g/dL, 0.2 g/dL and 0.4 g/dL in concentrated sulfuric acid at 30°C were determined from the following expression. A value at a concentration of 0 was extrapolated from the inherent viscosities, and defined as an intrinsic viscosity [$\eta$] .

$$\eta inh = [In(t1/t0)]/c$$

wherein $\eta$inh denotes an inherent viscosity (dL/g), t0 denotes a time of flow of the solvent (sec), t1 denotes a time of flow of the resin solution (sec), and c denotes a concentration of resin in the solution (g/dL).

(2) Melting temperature and glass transition temperature of thermoplastic resin

Using a differential scanning calorimeter (DSC-7 manufactured by PerkinElmer, Inc.), a thermoplastic resin was heated at 10°C/min from 20°C to 350°C and held for 5 minutes (1st scan) in a nitrogen atmosphere. The thermoplastic resin was then allowed to cool at 100°C/min from 350°C to 20°C, and held for 5 minutes. A glass transition temperature in the process of heating the thermoplastic resin again at 10°C/min from 20°C to 350°C (2nd scan) was defined as Tg of the thermoplastic resin. A temperature at the peak top of crystal melting peaks observed in the 2nd scan was defined as Tm.

(3) Degree of crystallinity of thermoplastic resin film

Using an infrared spectrophotometer (Infrared Spectrophotometer FT/IR-6100 manufactured by JASCO Corporation), FT-IR ATR measurement was performed on the front and back surfaces of a stretched thermoplastic resin film. For conditions of the measurement, diamond was used as the ATR prism, the incidence angle was 45°, the resolution was 4 cm$^{-1}$, and the number of scans was 128. An area ratio determined by P1/(P1 + P2) was defined as a degree of crystallinity, where P1 is an area of a peak present at the lower wavelength (peak derived from crystallization) and P2 is an area of a peak present at the higher wavelength (peak derived from an amorphous part), in a wavelength range of 1100 to 1250 cm$^{-1}$.

(4) Haze of thermoplastic resin film

Using a haze meter (NDH 2000) manufactured by NIPPON DENSHOKU INDUSTRIES Co., Ltd, the haze of the thermoplastic resin film was measured according to JIS K 7105.

(5) Kinetic friction coefficient of thermoplastic resin film

The kinetic friction coefficient of the thermoplastic resin film was measured according to JIS K 7125.

(6) Heat shrinkage ratio of thermoplastic resin film

A strip specimen (10 mm in width and 100 mm in length) was cut out from the thermoplastic resin film with respect to each of the machine direction and the transverse direction. The obtained test specimens were each treated in an atmosphere at 250°C for 5 minutes, and then left to stand at a temperature of 23°C and a humidity of 50% RH for 2 hours, the size of the specimen in the length direction was then measured, and the heat shrinkage ratio of the specimen in the machine direction, $S_{MD}$ and the heat shrinkage ratio of the specimen in the transverse direction, $S_{TD}$ were determined from the following expression.

heat shrinkage ratio (%) = [{original length - length after treatment}/original length] $\times$ 100

(7) Tensile strength of thermoplastic resin film

The tensile strength of the thermoplastic resin film in each of the machine direction and the transverse direction was measured according to JIS K 7127.

(8) Loop stiffness value of thermoplastic resin film

The thermoplastic resin film was conditioned in an environment at a temperature of 23°C and a humidity of 50% RH for 1 day, a specimen (10 mm in width and 200 mm in length) was then cut out from the film in an arbitrary direction, and the loop stiffness value was measured using Loop Stiffness Tester DA manufactured by Toyo Seiki Co., Ltd. The measurement was performed under conditions of a loop length of 60 mm, a squash amount of 15 mm and a compression rate of 3.3 mm/s, and an average value from n = 5 was defined as a loop stiffness value.

(9) Evaluation of toughness of thermoplastic resin film

The thermoplastic resin film was cut into a width of 20 mm and a length of 120 mm, and a surface of the thus obtained specimen was coated with a copper foil by a sputtering method to obtain a metallized laminate. On the surface of the metal foil of the obtained metallized laminate, an etching mask patterned in a wiring shape was formed.
Thereafter, portions of the metal foil which were not covered with the etching mask were removed with a soak solution, and subsequently, the etching mask was removed with an alkaline release solution. Finally, by soldering, an LED device was bonded onto the obtained metal foil patterned in a wiring shape, thereby producing a simple LED-mounting module. The sample was fixed on a horizontal platen with its end protruded by 100 mm from the platen, the amount of warpage of the end portion from the platen surface was measured, and the toughness was evaluated on the basis of the following criteria. From a practical point of view, the sample preferably meets one of A to C, more preferably meets one of A and B, and still more preferably meets A.

A: 25 mm or less
B: more than 25 mm and 30 mm or less
C: more than 30 mm and 35 mm or less
D: more than 35 mm

(10) Flex resistance

A specimen of 30 mm $\times$ 200 mm was cut out, sufficiently conditioned at a temperature of 20°C and a humidity of 65% RH, and then attached to a clamshell type bending tester (model DR11MR-CS-m manufactured by YUASA SYSTEM CO., LTD.). In the above-described atmosphere, a bending test was conducted with n = 5 for each film under conditions of a bend radius of 1.0 mm, a bending angle of 0° to 180° and a testing rate of 60 r/min. The specimen was taken out every 50,000 tests such that the specimen was taken out after 300,000 tests, after 350,000 tests, after 400,000 tests, and so on, and whether the specimen was broken was visually confirmed. In the case where the specimen was broken, the number of tests conducted until the confirmation was recorded, and the test was ended. In the case where the specimen was not broken, the bending test was continued. All the tests were ended after being conducted 500,000 times. For specimens which were not broken, whitening and the bending mark were visually evaluated on the basis of the following criteria, respectively, and recorded with their lowest scores as evaluation results.

<Whitening>

Good: The bent portion does not whiten.
Moderate: The transparency of the bent portion deteriorated. Poor: The bent portion whitened.

<Bending mark>

Good: There is no bending mark.
Moderate: A bending wrinkle was generated.
Poor: There was a bending mark.

2. Raw materials

(1) Thermoplastic resin

Thermoplastic resin A:

A resin manufactured by the following method was used.
A reaction vessel was charged with 3,289 parts by mass of terephthalic acid (TA), 2,533 parts by mass of 1,9-nonanediamine (NDA), 633 parts by mass of 2-methyl-1,8-octanediamine (MODA), 48.9 parts by mass of benzoic acid (BA), 6.5 parts by mass of sodium hypophosphite monohydrate (0.1 mass% with respect to the total amount of the four polyamide raw materials) and 2,200 parts by mass of distilled water, and purged with nitrogen. The molar ratio of these raw materials (TA/BA/NDA/MODA) is 99/2/80/20.
The contents of the reaction vessel were stirred at 100°C for 30 minutes, and the internal temperature was raised to 210°C over 2 hours. Here, the pressure inside the reaction vessel rose to 2.12 MPa (22 kg/cm$^2$). The reaction was continued for 1 hour, and the temperature was then raised to 230°C. For 2 hours thereafter, the reaction mixture was maintained at a temperature of 230°C, and reacted while being maintained at a pressure of 2.12 MPa (22 kg/cm$^2$) by gradually removing water vapor. Next, the pressure was decreased to 0.98 MPa (10 kg/cm$^2$) over 30 minutes, and the reaction was carried out for further 1 hour to obtain a prepolymer. This was dried under reduced pressure at a temperature of 100°C for 12 hours, and then pulverized to a size of 2 mm or less.
Subsequently, the pulverized prepolymer was subjected to solid phase polymerization under conditions of a temperature of 230°C and a pressure of 13.3 Pa (0.1 mmHg) for 10 hours to obtain a polymer. This was supplied to a twin-screw extruder (TEX 44C manufactured by The Japan Steel Works, Ltd.), melted, kneaded and extruded under a condition of a cylinder temperature of 320°C, and allowed to cool, and cut to manufacture pellets of a thermoplastic resin A. The thermoplastic resin A had a melting temperature of 290°C, a glass transition temperature of 125°C and an intrinsic viscosity of 1.17 dL/g.

Thermoplastic resin B:

A resin manufactured by the following method was used.
A reaction vessel was charged with 489 parts by mass of terephthalic acid (TA), 507 parts by mass of 1,10-decanediamine (DDA), 2.8 parts by mass of benzoic acid (BA), 1.0 part by mass of sodium hypophosphite monohydrate (0.1 mass% with respect to the total amount of the three polyamide raw materials) and 1,000 parts by mass of distilled water, and purged with nitrogen. The molar ratio of these raw materials (TA/BA/DDA) was 99/2/100.
The contents of the reaction vessel were stirred at 28 revolutions per minute at 80°C for 0.5 hours, then heated to 230°C, then heated at 230°C for 3 hours, and then allowed to cool. The reaction product was taken out.

The reaction product was pulverized, then heated at 220°C for 5 hours under a flow of nitrogen in a drier, and subjected to solid phase polymerization to obtain a polymer. This was supplied to a twin-screw extruder (TEX 44C manufactured by The Japan Steel Works, Ltd.), melted, kneaded and extruded under a condition of a cylinder temperature of 320°C, and allowed to cool, and cut to manufacture pellets of a thermoplastic resin B. The thermoplastic resin B had a melting temperature of 316°C, a glass transition temperature of 150°C and an intrinsic viscosity of 1.24 dL/g.

Thermoplastic resin C:

Polyamide 6 resin (A1030 BRF manufactured by UNITIKA LTD., monomer content: 1.0% or less, melting temperature: 223°C, glass transition temperature: 52°C, intrinsic viscosity: 3.10 dL/g)

Thermoplastic resin D:

Polyethylene terephthalate resin (UT-CBR manufactured by Nippon Ester Co., Ltd., melting temperature: 255°C, glass transition temperature: 78°C, intrinsic viscosity: 0.67 dL/g)

(2) Fine particles

Master chips (M1) to (M13) containing 2 mass% of silica and produced by the following method were used.

- Master chip (M1)
  98 parts by mass of the thermoplastic resin A and 2 parts by mass of silica As (NIPGEL AZ-204 manufactured by Tosoh Silica Corporation, average particle diameter: 1.7 $\mu$m) were melted and kneaded.
- Master chip (M2)
  98 parts by mass of the thermoplastic resin A and 2 parts by mass of silica Bs (NIPGEL AZ-200 manufactured by Tosoh Silica Corporation, average particle diameter: 2.0 $\mu$m) were melted and kneaded.
- Master chip (M3)
  98 parts by mass of the thermoplastic resin A and 2 parts by mass of silica Cs (manufactured by FUJI SILYSIA CHEMICAL LTD., average particle diameter: 2.3 $\mu$m) were melted and kneaded.
- Master chip (M4)
  98 parts by mass of the thermoplastic resin A, 1 part by mass of silica As and 1 part by mass of silica Bs were melted and kneaded.
- Master chip (M5)
  98 parts by mass of the thermoplastic resin A and 2 parts by mass of acrylic Da (NMB-0220C manufactured by ENEOS LC Company, Limited, average particle diameter: 2.0 $\mu$m) were melted and kneaded.
- Master chip (M6)
  98 parts by mass of the thermoplastic resin A and 2 parts by mass of acrylic Ea (NMB-0320C manufactured by ENEOS LC Company, Limited, average particle diameter: 3.0 $\mu$m) were melted and kneaded.
- Master chip (M7)
  98 parts by mass of the thermoplastic resin A, 1 part by mass of acrylic Da and 1 part by mass of acrylic Ea were melted and kneaded.
- Master chip (M8)
  98 parts by mass of the thermoplastic resin A and 2 parts by mass of acrylic Fa (NMB-0520C manufactured by ENEOS LC Company, Limited, average particle diameter: 5.0 $\mu$m) were melted and kneaded.
- Master chip (M9)
  98 parts by mass of the thermoplastic resin A, 1 part by mass of acrylic Da and 1 part by mass of acrylic Fa were melted and kneaded.
- Master chip (M10)
  98 parts by mass of the thermoplastic resin B and 2 parts by mass of acrylic Da were melted and kneaded.
- Master chip (M11)
  98 parts by mass of the thermoplastic resin C and 2 parts by mass of acrylic As were melted and kneaded.
- Master chip (M12)
  98 parts by mass of the thermoplastic resin D and 2 parts by mass of acrylic As were melted and kneaded.
- Master chip (M13)
  98 parts by mass of the thermoplastic resin D, 1 part of acrylic Ea and 1 part of acrylic Fa were melted and kneaded.

(3) Hindered phenol-based heat stabilizer

GA: 3.9-bis[2-{3-(3-t-butyl-4-hydroxy-5-methylphenyl)propionyloxy}-1,1-dimethylethyl]-2,4,8,10-tetraoxaspiro[5.5]undecane (SUMILIZER GA-80 manufactured by Sumitomo Chemical Co., Ltd., decomposition temperature: 392°C).

Example 1

The thermoplastic resin A, GA and the master chip (M1) were mixed so that the mixture contained 0.2 parts by mass of GA and 0.1 parts by mass of silica As per 100 parts by mass of the thermoplastic resin A.

The mixture was introduced into a 65 mm single-screw extruder at a cylinder temperature of 320°C, melted, extruded in a sheet shape through a T-die at 320°C, brought into close contact electrostatically with a cooling roll with a surface temperature of 40°C, and thereby allowed to cool to obtain a substantially non-oriented unstretched film having a thickness of 650 $\mu$m.

Next, the unstretched film was guided, with its both ends grasped by clips, to a tenter-type sequential biaxial stretching machine to perform sequential biaxial stretching. For stretching conditions, the temperature of a preheating section was 155°C, the temperature of a stretching section was 150°C, the rate of distortion in stretching in each of the machine direction and the transverse direction was 3,200%/min, and the stretching ratios in the machine direction and the transverse direction were 3.0 and 3.3, respectively. After the stretching, the film was thermally fixed at 280°C for 5 seconds, relaxed at a relaxation ratio of 3.0% only in the transverse direction, and cooled at a temperature of 130°C for 3 seconds to obtain a thermoplastic resin film having a thickness of 75 $\mu$m. Table 1 shows the film characteristics of the obtained thermoplastic resin film.

Examples 2 to 28 and Comparative Examples 1 to 7

Except that a change was made so that the type of thermoplastic resin, the type and content of fine particles, the thickness of the unstretched film, the stretching ratio and the cooling temperature were as shown in Tables 1 and 2, the same procedure as in Example 1 was carried out to obtain thermoplastic resin films. In Comparative Example 1, cooling was not performed.

Example 29

The thermoplastic resin C and the master chip (M11) were mixed so that the mixture contained 0.1 parts by mass of silica As per 100 parts by mass of the thermoplastic resin C.

The mixture was introduced into a 65 mm single-screw extruder at a cylinder temperature of 240°C, melted, supplied to a T-die at 240°C, discharged in a sheet shape, and wound around a metallic drum adjusted to a temperature of 20°C, thereby allowing the sheet to cool. The sheet was rolled up to manufacture a substantially non-oriented unstretched film having a thickness of 780 $\mu$m.

Next, the unstretched film was guided, with its both ends grasped by clips, to a tenter-type sequential biaxial stretching machine to perform sequential biaxial stretching. For stretching conditions, the temperature of a preheating section was 65°C, the temperature of a stretching section was 96°C, the rate of distortion in stretching in each of the machine direction and the transverse direction was 3,200%/min, and the stretching ratios in the machine direction and the transverse direction were 2.8 and 3.7, respectively. After the stretching, the film was thermally fixed at 202°C for 5 seconds, relaxed at a relaxation ratio of 3.0% in the transverse direction, and cooled at a temperature of 130°C for 3 seconds to obtain a thermoplastic resin film having a thickness of 75 $\mu$m.

Example 30

The thermoplastic resin C and the master chip (M12) were mixed so that the mixture contained 0.1 parts by mass of silica As per 100 parts by mass of the thermoplastic resin D.

The mixture was introduced into a 65 mm single-screw extruder at a cylinder temperature of 280°C, melted, supplied to a T-die at 280°C, discharged in a sheet shape, and wound around a metallic drum adjusted to a temperature of 20°C, thereby allowing the sheet to cool. The sheet was rolled up to manufacture a substantially non-oriented unstretched film having a thickness of 780 $\mu$m.

Next, the unstretched film was guided, with its both ends grasped by clips, to a tenter-type sequential biaxial stretching machine to perform sequential biaxial stretching. For stretching conditions, the temperature of a preheating section was 75°C, the temperature of a stretching section was 85°C, the rate of distortion in stretching in each of the machine direction and the transverse direction was 3,200%/min, and the stretching ratios in the machine direction and the transverse direction were 2.8 and 3.7, respectively. After the stretching, the film was thermally fixed at 243°C for 5 seconds, relaxed at a relaxation ratio of 3.0% in the transverse direction, and cooled at a temperature of 130°C for 3 seconds to obtain a thermoplastic resin film having a thickness of 75 $\mu$m.

Example 31

Except that a change was made so that the type and content of fine particles and the thickness of the unstretched film were as shown in Table 2, the same procedure as in Example 30 was carried out to obtain a thermoplastic resin film.

Example 32

Except that relaxation was performed at a relaxation ratio of 3.0% in the transverse direction and at a relaxation ratio of 1.0% in the machine direction, the same procedure as in Example 1 was carried out to obtain a thermoplastic resin film.

Tables 1 and 2 show the configuration of the thermoplastic resin film, conditions for manufacturing of the film, the characteristics of the obtained thermoplastic resin film.

[Table 1]

| | No. | Type of resin | Fine particle | | | Thickness of unstretched film | Stretching ratio | | | Cooling temperature | Thickness | Loop stiffness value | Degree of crystallinity | Haze | Kinetic friction coefficient | Heat shrinkage ratio | | Tensile strength | | Toughness evaluation | Flex resistance | |
| | | | Type | Particle diameter | Content | | MD | TD | Area ratio | | | | | | | MD | TD | MD | TD | | Number of tests | Visual evaluation after 500,000 tests |
| | | | | μm | % | μm | ratio | ratio | ratio | °C | μm | mN/cm | — | % | — | % | % | MPa | MPa | — | by ten thousands | |
| Example | 1 | A | As | 1.7 | 0.1 | 650 | 3 | 3.3 | 9.9 | 130 | 75 | 145 | 0.18 | 9 | 0.8 | 0.9 | 0.3 | 158 | 269 | A | 50 | Good |
| | 2 | A | As | 1.7 | 0.1 | 650 | 3 | 3.3 | 9.9 | 115 | 75 | 141 | 0.13 | 8 | 0.8 | 1.0 | 0.5 | 165 | 273 | B | 50 | Good |
| | 3 | A | As | 1.7 | 0.1 | 650 | 3 | 3.3 | 9.9 | 145 | 75 | 142 | 0.12 | 8 | 0.8 | 0.8 | 0.2 | 169 | 259 | B | 50 | Good |
| | 4 | A | As | 1.7 | 0.1 | 710 | 3.3 | 3.3 | 10.9 | 130 | 75 | 147 | 0.24 | 12 | 0.8 | 1.2 | 0.3 | 178 | 279 | A | 50 | Good |
| | 5 | A | As | 1.7 | 0.1 | 710 | 3.3 | 3.3 | 10.9 | 115 | 75 | 144 | 0.15 | 10 | 0.8 | 1.4 | 0.4 | 174 | 263 | B | 50 | Good |
| | 6 | A | As | 1.7 | 0.1 | 690 | 3 | 4.0 | 12.0 | 130 | 75 | 148 | 0.21 | 13 | 0.8 | 0.8 | 0.8 | 160 | 280 | B | 50 | Good |
| | 7 | A | As | 1.7 | 0.1 | 690 | 3 | 4.0 | 12.0 | 115 | 75 | 144 | 0.15 | 10 | 0.8 | 1.0 | 1.1 | 158 | 283 | C | 50 | Good |
| | 8 | A | As | 1.7 | 0.2 | 650 | 3 | 3.3 | 9.9 | 130 | 75 | 147 | 0.2 | 13 | 0.6 | 1.0 | 0.2 | 165 | 279 | B | 50 | Good |
| | 9 | A | As | 1.7 | 0.1 | 870 | 3 | 3.3 | 9.9 | 130 | 100 | 209 | 0.21 | 12 | 0.8 | 1.0 | 0.3 | 177 | 260 | A | 50 | Moderate |
| | 10 | A | Bs | 2.0 | 0.1 | 650 | 3 | 3.3 | 9.9 | 130 | 75 | 140 | 0.19 | 12 | 0.7 | 0.9 | 0.2 | 163 | 274 | C | 50 | Good |
| | 11 | A | As Bs | 1.7 2.0 | 0.05 0.05 | 650 | 3 | 3.3 | 9.9 | 130 | 75 | 142 | 0.2 | 10 | 0.7 | 1.0 | 0.3 | 156 | 266 | C | 50 | Good |
| | 12 | A | Cs | 2.3 | 0.1 | 740 | 3 | 3.3 | 9.9 | 130 | 75 | 147 | 0.2 | 13 | 0.6 | 1.2 | 0.7 | 142 | 238 | C | 50 | Good |
| | 13 | A | Da | 2.0 | 0.1 | 610 | 3 | 3.3 | 9.9 | 130 | 70 | 140 | 0.2 | 3 | 0.8 | 1.0 | 0.4 | 159 | 266 | C | 50 | Good |
| | 14 | A | Da | 2.0 | 0.1 | 650 | 3 | 3.3 | 9.9 | 130 | 75 | 150 | 0.2 | 2 | 0.9 | 0.8 | 0.3 | 165 | 264 | A | 50 | Good |
| | 15 | A | Da | 2.0 | 0.1 | 650 | 3 | 3.3 | 9.9 | 115 | 75 | 146 | 0.15 | 1 | 0.9 | 1.0 | 0.5 | 168 | 258 | B | 50 | Good |
| | 16 | A | Da | 2.0 | 0.3 | 650 | 3 | 3.3 | 9.9 | 130 | 75 | 152 | 0.2 | 6 | 0.6 | 0.8 | 0.3 | 165 | 277 | A | 50 | Good |
| | 17 | A | Da | 2.0 | 0.5 | 650 | 3 | 3.3 | 9.9 | 130 | 75 | 158 | 0.19 | 10 | 0.5 | 0.9 | 0.3 | 134 | 221 | A | 50 | Moderate |
| | 18 | A | Ea | 3.0 | 0.1 | 650 | 3 | 3.3 | 9.9 | 130 | 75 | 148 | 0.21 | 3 | 0.8 | 0.9 | 0.3 | 171 | 279 | B | 50 | Good |
| | 19 | A | Ea | 3.0 | 0.2 | 650 | 3 | 3.3 | 9.9 | 130 | 75 | 151 | 0.2 | 5 | 0.6 | 0.8 | 0.3 | 165 | 267 | A | 50 | Good |
| | 20 | A | Da Ea | 2.0 3.0 | 0.05 0.05 | 650 | 3 | 3.3 | 9.9 | 130 | 75 | 149 | 0.2 | 3 | 0.8 | 0.8 | 0.4 | 157 | 260 | B | 50 | Good |

| Configuration of thermoplastic resin film | Condition for manufacturing of thermoplastic resin film | Physical property of thermoplastic resin film |

EP 4 442 740 A1

16

[Table 2]

| | No. | Type of resin | Fine particle Type | Particle diameter μm | Content % | Thickness of unstretched film μm | MD ratio | TD ratio | Area ratio | Cooling temperature °C | Thickness μm | Loop stiffness value mN/cm | Degree of crystallinity − | Haze % | Kinetic friction coefficient − | Heat shrinkage MD % | Heat shrinkage TD % | Tensile strength MD MPa | Tensile strength TD MPa | Toughness evaluation − | Number of tests by ten thousands | Visual evaluation after 500,000 tests |
|---|---|---|---|---|---|---|---|---|---|---|---|---|---|---|---|---|---|---|---|---|---|---|
| Example | 21 | A | Fa | 5.0 | 0.1 | 650 | 3 | 3.3 | 9.9 | 130 | 75 | 146 | 0.19 | 3 | 0.7 | 0.9 | 0.3 | 171 | 263 | B | 50 | Good |
| | 22 | A | Fa | 5.0 | 0.2 | 650 | 3 | 3.3 | 9.9 | 130 | 75 | 149 | 0.19 | 6 | 0.6 | 0.8 | 0.1 | 157 | 256 | B | 50 | Good |
| | 23 | A | Da Fa | 2.0 5.0 | 0.05 0.05 | 650 | 3 | 3.3 | 9.9 | 130 | 75 | 149 | 0.21 | 1.5 | 0.6 | 0.8 | 0.2 | 166 | 279 | B | 50 | Good |
| | 24 | A | Da Fa | 2.0 5.0 | 0.1 0.1 | 650 | 3 | 3.3 | 9.9 | 130 | 75 | 153 | 0.19 | 2.5 | 0.4 | 0.7 | 0.2 | 157 | 274 | A | 50 | Good |
| | 25 | A | Da | 2.0 | 0.1 | 870 | 3 | 3.3 | 9.9 | 130 | 100 | 221 | 0.19 | 5 | 0.8 | 1.1 | 0.1 | 171 | 256 | A | 50 | Moderate |
| | 26 | A | Da | 2.0 | 0.1 | 1300 | 3 | 3.3 | 9.9 | 130 | 150 | 302 | 0.19 | 11 | 0.8 | 1.1 | 0.2 | 166 | 262 | A | 50 | Poor |
| | 27 | A | − | − | 0 | 650 | 3 | 3.3 | 9.9 | 130 | 75 | 140 | 0.2 | 0.8 | Measurement impossible | 0.9 | 0.3 | 166 | 241 | B | 50 | Moderate |
| | 28 | B | Da | 2.0 | 0.1 | 650 | 3 | 3.3 | 9.9 | 130 | 75 | 142 | 0.18 | 7 | 0.9 | 0.3 | 0.1 | 161 | 263 | B | 45 | − |
| | 29 | C | As | 1.7 | 0.1 | 780 | 2.8 | 3.7 | 10.4 | 130 | 75 | 140 | 0.21 | 9 | 0.8 | − | − | 242 | 268 | C | 40 | − |
| | 30 | D | As | 1.7 | 0.1 | 780 | 2.8 | 3.7 | 10.4 | 130 | 75 | 155 | − | 5 | 0.8 | − | − | 215 | 251 | A | 30 | − |
| | 31 | D | Ea Fa | 3.0 5.0 | 0.1 0.1 | 420 | 2.8 | 3.7 | 10.4 | 130 | 40 | 141 | − | 3 | 0.3 | − | − | 187 | 222 | C | 30 | − |
| | 32 | A | As | 1.7 | 0.1 | 650 | 3 | 3.3 | 9.9 | 130 | 75 | 144 | 0.17 | 9 | 0.8 | 0.6 | 0.3 | 160 | 264 | A | 50 | Good |
| Comparative Example | 1 | A | Cs | 2.3 | 0.1 | 740 | 3 | 3.3 | 9.9 | Not performed | 75 | 135 | 0.06 | 10 | 0.6 | 1.3 | 0.7 | 148 | 244 | D | 50 | Good |
| | 2 | A | As | 1.7 | 0.1 | 650 | 3 | 3.3 | 9.9 | 100 | 75 | 138 | 0.07 | 6 | 0.8 | 0.9 | 0.3 | 163 | 255 | D | 50 | Good |
| | 3 | A | As | 1.7 | 0.1 | 610 | 3 | 3.3 | 9.9 | 100 | 70 | 121 | 0.09 | 8 | 0.8 | 1.1 | 0.6 | 169 | 271 | D | 50 | Good |
| | 4 | A | As | 1.7 | 0.1 | 650 | 3 | 3.3 | 9.9 | 160 | 75 | 138 | 0.05 | 7 | 0.8 | 0.8 | 0.3 | 166 | 275 | D | 50 | Good |
| | 5 | A | As | 1.7 | 0.1 | 510 | 1.8 | 3.3 | 5.9 | 130 | 75 | 135 | 0.06 | 4 | 0.8 | 0.6 | 0.5 | 105 | 251 | D | 50 | Good |
| | 6 | A | As | 1.7 | 0.1 | 760 | 3 | 4.4 | 13.2 | 130 | 75 | 150 | 0.27 | 18 | 0.8 | 1.1 | 1.6 | 159 | 287 | B | 50 | Good |
| | 7 | A | As | 1.7 | 0.1 | 1300 | 3 | 3.3 | 9.9 | 130 | 150 | 289 | 0.19 | 20 | 0.8 | 1.1 | 0.3 | 178 | 266 | A | 50 | Poor |

The thermoplastic resin films of Examples 1 to 32 satisfied all characteristic values specified in the present invention, and had a low haze, excellent transparent, a high loop stiffness value, sufficient toughness, and excellent flex resistance.

The thermoplastic resin films of Comparative Examples 1 to 5 had a low loop stiffness value, and the thermoplastic resin films of Comparative Examples 6 and 7 were poor in haze.

The thermoplastic resin film of Comparative Example 1 was produced under the same film formation and stretching conditions as in Patent Literature 1 (Example 12) cited as a prior art document, but had a degree of crystallinity of 0.06 and a loop stiffness value of less than 140 mN/cm because cooling was not performed after stretching or thermal fixation.

**Claims**

1. A thermoplastic resin film having a haze of 13% or less, wherein a loop stiffness value in at least one direction on a film plane as measured by a loop stiffness tester is 140 mN/cm or more.

2. The thermoplastic resin film according to claim 1, which has a thickness of 40 μm or more.

3. The thermoplastic resin film according to claim 1 or 2, wherein a glass transition temperature of a thermoplastic resin forming the thermoplastic resin film is 60°C or higher.

4. The thermoplastic resin film according to any one of claims 1 to 3, wherein a degree of crystallinity of a surface layer is 0.1 or more.

5. The thermoplastic resin film according to any one of claims 1 to 4, wherein the thermoplastic resin is a semi-aromatic polyamide.

6. The thermoplastic resin film according to any one of claims 1 to 5, which passes 400,000 or more breakage inducing tests in a flexure test conducted using a clamshell type bending tester.

7. The thermoplastic resin film according to any one of claims 1 to 6, comprising 0.01 to 0.4% by mass of fine particles.

8. The thermoplastic resin film according to any one of claims 1 to 7, which has a kinetic friction coefficient of 0.8 or less as measured according to JIS K 7125.

9. A laminate comprising the thermoplastic resin film according to any one of claims 1 to 8 and an easily adhesive layer laminated on at least one surface of the thermoplastic resin film.

10. An LED-mounting substrate comprising the laminate according to claim 9.

11. A flexible LED display comprising the LED-mounting substrate according to claim 10.

12. A method of manufacturing the thermoplastic resin film according to any one of claims 1 to 8, comprising biaxially stretching an unstretched film of a thermoplastic resin, and then performing cooling.

## INTERNATIONAL SEARCH REPORT

| International application No. |
|---|
| **PCT/JP2022/043504** |

**A. CLASSIFICATION OF SUBJECT MATTER**

*C08J 5/18*(2006.01)i; *C09D 5/00*(2006.01)i; *C09D 201/00*(2006.01)i; *G09F 9/30*(2006.01)i; *G09F 9/33*(2006.01)i
FI:　C08J5/18 CFG; C09D5/00 D; C09D201/00; G09F9/30 310; G09F9/30 360; G09F9/33

According to International Patent Classification (IPC) or to both national classification and IPC

**B. FIELDS SEARCHED**

Minimum documentation searched (classification system followed by classification symbols)

　　C08J5/18; C09D5/00; C09D201/00; G09F9/30; G09F9/33

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/171115 A1 (UNITIKA LTD.) 27 August 2020 (2020-08-27) | 1-12 |
| Y | claims, paragraphs [0130], [0132]-[0207], examples | 12 |
| X | WO 2020/116450 A1 (FUJIFILM CORP.) 11 June 2020 (2020-06-11) | 1-4, 6-9 |
| Y | claims, paragraphs [0016], [0067]-[0075], [0149], [0150], [0162]-[0201], examples | 12 |
| A | JP 2019-099626 A (UNITIKA LTD.) 24 June 2019 (2019-06-24) claims, examples, entire text | 1-12 |
| A | JP 2016-074894 A (AKRON POLYMER SYSTEMS INC.) 12 May 2016 (2016-05-12) claims, examples, entire text | 1-12 |
| A | JP 2016-185631 A (TORAY IND., INC.) 27 October 2016 (2016-10-27) claims, examples, entire text | 1-12 |
| P, A | JP 2022-035045 A (UNITIKA LTD.) 04 March 2022 (2022-03-04) claims, examples, entire text | 1-12 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/043504**

| Patent document cited in search report | | | Publication date (day/month/year) | Patent family member(s) | | Publication date (day/month/year) |
|---|---|---|---|---|---|---|
| WO | 2020/171115 | A1 | 27 August 2020 | JP 2020-131577 A<br>US 2022/0056229 A1<br>claims, paragraphs [0265],<br>[0267]-[0403], examples<br>JP 2020-131673 A<br>JP 2021-47295 A<br>EP 3928980 A1<br>CN 113453901 A<br>KR 10-2021-0132076 A<br>TW 202103964 A | | |
| WO | 2020/116450 | A1 | 11 June 2020 | (Family: none) | | |
| JP | 2019-099626 | A | 24 June 2019 | (Family: none) | | |
| JP | 2016-074894 | A | 12 May 2016 | US 2016/0096925 A1<br>claims, examples, entire text<br>CN 105491839 A<br>KR 10-2016-0040120 A<br>TW 201632566 A | | |
| JP | 2016-185631 | A | 27 October 2016 | (Family: none) | | |
| JP | 2022-035045 | A | 04 March 2022 | (Family: none) | | |

Form PCT/ISA/210 (patent family annex) (January 2015)

**REFERENCES CITED IN THE DESCRIPTION**

**Patent documents cited in the description**

- JP 2019099626 A